# EUROPEAN PATENT APPLICATION

(11) **EP 1 542 121 A2**
(43) Date of publication of application: **15.06.2005**
(21) Application number: 04257525.8
(22) Date of filing: 03.12.2004
(51) Int. Cl.: G06F 3/033

(54) **Coordinate input device, image display device and electronic apparatus**

(30) Priority: 11.12.2003 JP 2003413180
(71) Applicant: ALPS ELECTRIC CO., LTD., Ota-ku Tokyo 145 (JP)
(72) Inventor: Nishiyama, Takashi, Otsuka-cho Ota-ku Tokyo (JP)
(74) Representative: Kensett, John Hinton

(57) **Abstract**

There is provided a coordinate input device capable of easily inputting coordinates by scanning an operation surface using an indicator, an image display device and an electronic apparatus, comprising the coordinate input device. In an.analog resistive film type coordinate input device, a first light-transmitting substrate 32 and a second light-transmitting substrate 31 are arranged so as to oppose each other with an insulating layer interposed therebetween, transparent conductive films are respectively formed on inner sides of the respective light-transmitting substrates, and printed circuits 37 and 38 connected to the transparent conductive films are respectively formed at peripheries of the first and second light-transmitting substrates. A decorative printing layer 41 is formed between a transparent conductive 34 formed on an inner side of the second light-transmitting substrate 31 and the second light-transmitting substrate 31, such that the printed circuit 37 and 38 respectively arranged at the peripheries of the first and second light-transmitting substrate 31 and 32 cannot be viewed form the operation surface side of the second light-transmitting substrate 31. A liquid crystal display device 10 comprises the coordinate input device 30 on a front side of a liquid crystal display unit 20.

## Description

### BACKGROUND OF THE INVENTION

### 1. Field of the Invention

The present invention relates to a coordinate input device, an image display device comprising the coordinate input device, and an electronic apparatus comprising the coordinate input device. Particularly, the present invention relates to a coordinate input device in which an operation surface can be scanned using an indicator to input coordinates, an image display device comprising the coordinate input device, and an electronic apparatus comprising such an image display device.

### 2. Description of the Related Art

Recently, as a display unit for electronic apparatuses such as personal digital assistants (PDA), there is known a display unit in which a transparent tablet (or a touch panel) is arranged on the front side of a liquid crystal display unit so that a user can directly operate an object such as a menu item displayed on the display unit with his/her finger or an indicator.

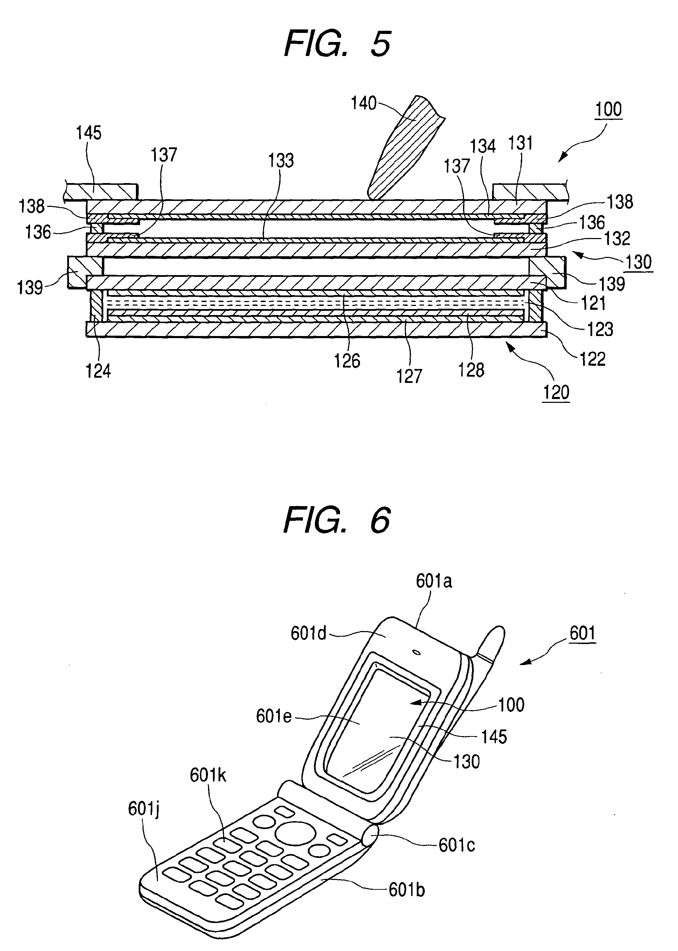

FIG. 5 is a sectional view illustrating an example of a liquid crystal display device comprising such a tablet.

A liquid crystal display device 100 shown in FIG. 5 is constructed such that a tablet 130 is arranged on the front side of a liquid crystal display unit 120. In the liquid crystal display unit 120, a liquid crystal layer 123 is interposed between an upper substrate 121 and a lower substrate 122, which are arranged to face each other and sealed with a sealing material 124b therebetween. A liquid crystal control layer 126 having electrodes, alignment films and the like is formed on the inner side (the liquid crystal layer 123 side) of the upper substrate 121. On the inner side (liquid crystal layer 123 side) of the lower substrate 122, a reflecting layer including a thin film made of a metal having high reflectance, such as aluminum or silver, or a transflective layer 127 made of a metallic thin film in which through-holes are formed, and a liquid crystal control layer 128 having electrodes, alignments films and the like are sequentially laminated on the lower substrate 122.

In the tablet 130, upper and lower transparent substrates 131 and 132 which are arranged to face each other are integrally bonded to each other with an adhesive layer 136. On the inner side (the upper substrate 131 side) of the lower substrate 132, a first electrode layer 133 is formed. On the first transparent electrode layer 133, insulating spacers (not shown) are formed so as to be spaced apart from each other. On the inner side (lower substrate 132 side) of the upper substrate 131, a second transparent electrode layer 134 is formed.

A lower printed circuit 137 including a lead-out circuit having a conductive paste which is made by dispersing conductive metallic fillers in a resin, a connecting electrode portion connected to the lead-out circuit and the like are formed on a peripheral portion of the lower substrate 132 at the inner side thereof. The printed circuit 137 is connected to the first transparent electrode layer 133. Furthermore, an upper printed circuit 138 including a lead-out circuit having a conductive paste which is made by dispersing conductive metallic fillers in a resin, a connecting electrode portion connected to the lead-out circuit and the like are formed on a peripheral portion of the upper substrate 131 at the inner side thereof. The printed circuit 138 is connected to the second transparent electrode layer 134.

Further, in such type of tablet 130, the upper substrate 131 has a transparent base, such that the printed circuits 137 and 138 are observed from the operation surface. Generally, at the periphery of the upper substrate 131 on the inner side thereof, a frame 145, which is also referred to as a bezel, is provided so as to cover the printed circuit forming area (for example, see Japanese Unexamined Patent Application Publication No. 10-104374)

The tablet 130 having the above construction is of a resistive contact type. The upper substrate 131 is pressed with the indicator 140 so as to flex the first and second electrode layers 133 and 134, which are spaced apart from each other by the film forming thickness of the adhesive layer 136 and the printed circuits 137 and 138, and by the spacers when the tablet 130 is not operated. Then, the first and second electrode layers 133 and 134 are brought into electrical contact with each other, such that coordinates can be input.

Further, the tablet 130 is fixed to the liquid crystal display unit 120 via supporting members 139, and in the state in which the tablet 130 is fixed, the tablet 130 and the liquid crystal display unit 120 are spaced apart from each other with a predetermined gap therebetween.

According to the liquid crystal display device 100 of the above-described construction, display can be performed using the liquid crystal display unit 120, and the upper surface of the tablet 130 is scanned by the indicator 140 (a pen-type indicator in the drawing), such that coordinates can be input. Accordingly, when an operation is performed to select, for example, an object such as a menu item displayed on the liquid crystal display unit 120, the selecting operation can be performed by pressing the displayed position of the object using the indicator 140.

However, in the liquid crystal display device 100 having the above construction, since a frame 145 is arranged at the periphery of the upper substrate 131 of the tablet 130 on the outer side thereof, when the liquid crystal display device 100 is installed, for example, in a display unit 601e of a mobile phone shown in FIG. 6, the thickness of the mobile phone increases. Furthermore, when a user views the display unit, the flame 145 is also observed, such that the appearance of the display unit deteriorates.

Further, when the above-mentioned frame 145 is arranged on the upper surface of the tablet 130 (on the outer surface of the upper substrate 131), since a step portion exists between the operation surface (the outer surface of the upper substrate 131) and the frame 145, the scanning on the surface of the tablet 130 by the indicator 140 is often obstructed to hinder an easy operation, and dust easily attaches to the step portion.

### SUMMARY OF THE INVENTION

The present invention has been made in consideration of the above circumstances, and an object of the present invention is to provide a coordinate input device, in which the appearance of the device is improved and the coordinate input operation is easily performed by scanning an operation surface using an indicator.

Further, another object of the present invention is to provide an image display device comprising the above-mentioned coordinate input device capable of decreasing the thickness of an electronic apparatus, when the image display device is installed in a display unit of an electronic apparatus such as a mobile phone, and which is also capable of preventing the attachment of dust and the like in a step portion between a frame and an operation surface.

Further, still another object of the present invention is to provide an electronic apparatus comprising the above-mentioned image display device, which has an improved appearance and convenience and which is capable of preventing the attachment of dust and the like on its display unit.

The present invention employs the following construction to accomplish the above objects.

In a coordinate input device according to a first aspect of the invention, a first light-transmitting substrate (a lower substrate on the fixed side) and a second light-transmitting substrate (an upper substrate on the operation side) oppose each other with an insulating layer interposed therebetween, the second light-transmitting substrate having its one surface serving as an operation surface, transparent conductive films are formed on respective inner sides of the light-transmitting substrates, printed circuits connected to the transparent conductive films are respectively formed at peripheries of the light-transmitting substrates, a voltage is alternately applied to the printed circuits formed on the first and second light-transmitting substrates, and an output voltage from the substrate to which the voltage is not applied is detected, such that a coordinate of a pressed position can be detected. A decorative printing layer is formed between the transparent conductive film formed on the inner side of the second light-transmitting substrate and the second light-transmitting substrate, and the printed circuits respectively formed at the peripheries of the first and second light-transmitting substrates are concealed by the decorative printing layer, such that the printed circuits cannot be viewed (visually seen) from the operation surface of the second light-transmitting substrate.

According to the coordinate input device of the first aspect of the invention, the decorative printing layer is formed between the transparent conductive film formed on the inner side of the second light-transmitting substrate and the second light-transmitting substrate, and the printed circuits respectively formed at the peripheries of the first and second light-transmitting substrates are concealed by the decorative printing layer, such that the printed circuits cannot be viewed from the operation surface of the second light-transmitting substrate. Furthermore, on the decorative printing layer, a decoration such as a pattern, a character, a mark, a design, or a color is provided, such that the appearance thereof is improved.

Further, since the decorative printing layer is formed on the inner side of the second light-transmitting substrate, an outer surface (an operation surface) of the second light-transmitting substrate can be made into a flat surface, and has no step portion which is prevalent in the conventional type in which a frame such as a bezel is provided on the outer surface of the tablet. Therefore, the scanning on the outer surface (operation surface) of the second light-transmitting substrate using an indicator and the like is not obstructed to allow an easy operation. Furthermore, since the outer surface of the second light-transmitting substrate can be made into a flat surface, a hard coating layer having abrasion resistance can be provided on the outer surface of the second light-transmitting substrate. Therefore, the second light-transmitting substrate can be protected by the hard coating layer.

Further, since the decorative printing layer can be formed by a printing method such as a screen printing method, a gravure printing method, and an offset printing method, a transfer method, or a vapor deposition method, the thickness of the decorative printing sheet is made small and the step difference between the inner surface of the second light-transmitting substrate and the decorative printing layer does not appear. Therefore, the coordinate input device of the first aspect can be made thinner than the conventional type coordinate input devices having a frame such as a bezel on the outer surface of the tablet.

Further, in the coordinate input device of the first aspect, it is preferable that a transparent overcoat layer is provided between the transparent conductive film formed on the inner side of the second light-transmitting substrate and the decorative printing layer. By providing such a transparent overcoat layer, the flatness of the second light-transmitting substrate at the inner side thereof can be improved, such that it is possible to favorably form the transparent conductive film on the inner side of the second light-transmitting substrate.

Further, it is preferable that, as a material of the overcoat layer, a material having a good adherence to the decorative printing layer, the transparent conductive film, and the second light-transmitting substrate is used to increase the adherence between the transparent conductive film and the decorative printing layer.

In a coordinate input device according to a second aspect of the invention, a first light-transmitting substrate (a lower substrate on the fixed side) and a second light-transmitting substrate (an upper substrate on the operation side) oppose each other with an insulating layer interposed therebetween, the second light-transmitting substrate having its one surface serving as an operation surface, transparent conductive films are formed on respective inner sides of the light-transmitting substrates, printed circuits connected to the transparent conductive films are respectively formed at peripheries of the light-transmitting substrates, a voltage is alternately applied to the printed circuits formed on the first and second light-transmitting substrates, and an output voltage from the substrate to which the voltage is not applied is detected, such that a coordinate of a pressed position can be detected.

A decorative printing sheet is formed on an outer surface of the second light-transmitting substrate, and the printed circuits respectively formed at the peripheries of the first and second light-transmitting substrates are concealed by the decorative printing sheet, such that the printed circuits cannot be viewed from the operation surface of the second light-transmitting substrate.

According to the coordinate input device of the second aspect, the decorative printing sheet is formed on the outer surface of the second light-transmitting substrate, such that the printed circuits cannot be viewed from the operation surface of the second light-transmitting substrate. Furthermore, on the decorative printing layer, a decoration such as a pattern, a character, a mark, or a design is provided, such that the appearance thereof is improved.

Further, even though the decorative printing sheet is formed on the outer surface of the second light-transmitting substrate, the decorative printing sheet has a sheet-like shape, such that it is possible to make the thickness thereof extremely thin. Therefore, the outer surface of the second light-transmitting substrate becomes substantially a flat surface. Thus, the scanning on the outer surface of the second light-transmitting substrate using an indicator and the like is not obstructed to allow an easy operation. Furthermore, since the outer surface of the second light-transmitting substrate can be made into a substantially flat surface, a hard coating layer having abrasion resistance can be provided on the outer surface of the second light-transmitting substrate. Therefore, the second light-transmitting substrate can be protected by the hard coating layer.

Further, in the decorative printing sheet, since a decoration such as a pattern, a character, a mark, a design or the like can be provided on a sheet-like film (base) by a printing method such as a screen printing method, a gravure printing method, and an offset printing method, a transfer method, or a deposition method, the thickness of the decorative printing sheet is made extremely small and there is little step difference between the outer surface of the second light-transmitting substrate and the decorative printing sheet. Therefore, the coordinate input device of the second aspect can be made thinner than the conventional type coordinate input devices having a frame such as a bezel on the outer surface of the tablet.

Further, an adhesive layer may be formed one surface of the decorative printing sheet. In this case, the decorative printing sheet before being provided on the outer surface of the second light-transmitting substrate may be adhered to a supporting sheet with an adhesive layer interposed therebetween. The decorative printing sheet can be arranged on the outer surface of the second light-transmitting substrate by attaching the adhesive layer side surface to the second light-transmitting substrate after peeling off the supporting sheet.

An image display device according to a third aspect of the invention comprises the coordinate input device of the present invention according to any one of the above constructions on the front side of the image display device such as a liquid crystal display device and an organic electro-luminescent (EL) display device.

According to the image display device of the third aspect comprising the coordinate input device of the present invention according to any one of the above constructions on the front side of the image display device in which the outer surface of the second light-transmitting substrate has a good flatness and the coordinate input device is made thin, it is easy to input coordinates by scanning the operation surface of the coordinate input device with an indicator, it is possible to smoothly select objects such as menu items displayed on the image display unit, and the image display device can be made thin. Furthermore, since the image display device is provided with the coordinate input device in which the outer surface of the second light-transmitting substrate has a good flatness, there is no step portion which is prevalent in the conventional type in which a frame such as a bezel is arranged on the outer surface of the tablet. Therefore, it is possible to prevent the adherence of dust and the like in the step portion.

Further, since the image display device is provided with the coordinate input device according to the present invention in which printed circuits are concealed by the decorative printing layer or the decorative printing sheet, the printed circuits cannot be viewed from the outside. Therefore, the appearance of the image display device is improved.

An electronic apparatus of the fourth aspect comprises the image display device of the third aspect on its display unit.

According to the electronic apparatus of the fourth aspect, since the electronic apparatus is provided with the image display device of the third aspect, the appearance of the electronic apparatus is improved to allow an easy operation, and it is possible to prevent dust and the like from being attached to the display unit.

According to the present invention as described above, it is possible to provide a coordinate input device capable of improving the appearance of the device and which is also capable of easily inputting coordinates by scanning an operation surface using an indicator.

Further, according to the above-mentioned image display device, since the image display device is provided with the coordinate input device according to the present invention, when the image display device is mounted on a display unit of an electronic apparatus such as a mobile phone, it is possible to make the electronic apparatus thin, and to prevent the adherence of dust and the like in a step portion between an operation surface and a frame.

Further, since an electronic apparatus of the present invention comprises the image display device of the present invention, it is possible to provide a thin type electronic apparatus having improved appearance and convenience, and which is capable of preventing the adherence of dust and the like on the display unit.

### BRIEF DESCRIPTION OF THE DRAWINGS

FIG. 1 is a schematic sectional view showing an embodiment of a liquid crystal display device comprising a coordinate input device related to the present invention;
FIG. 2 is a schematic sectional view showing another embodiment of a coordinate input device related to the present invention;
FIG. 3 is a schematic sectional view showing still another embodiment of a coordinate input device related to the present invention;
FIG. 4 is a perspective view showing an example of an electronic apparatus comprising a liquid crystal display device related to the present invention;
FIG. 5 is a sectional view showing an example of a liquid crystal display device comprising a conventional tablet; and
FIG. 6 is a sectional view showing an example of a mobile phone comprising a conventional liquid crystal device on a display unit thereof.

### DESCRIPTION OF THE PREFERRED EMBODIMENT

Embodiments of the present invention will now be described with reference to the drawings. In all the following drawings, scales of the film thickness or dimensions of respective elements are made appropriately different from each other in order to easily see the drawings.

### (Embodiments of Coordinate Input Device and Image Display Device)

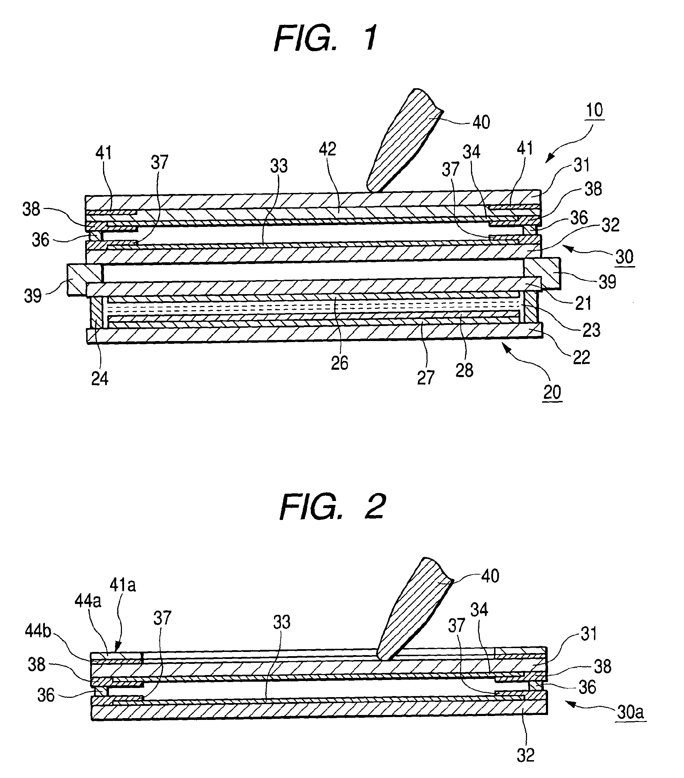

FIG. 1 is a schematic sectional view of a liquid crystal display device that is one embodiment of an image display device according to the present invention.

The liquid crystal display device 10 comprises a liquid crystal display unit 20, and an analog resistive film type touch panel (a coordinate input device) 30, which is one embodiment of the present invention, arranged on the front side thereof.

In the liquid crystal display unit 20, a liquid crystal layer 23 is interposed between an upper substrate 21 and a lower substrate 22, which are arranged to face each other, and is sealed with a sealing material 24. A liquid crystal control layer 26 having electrodes, alignment films and the like is formed on the inner side (on the liquid crystal layer 23 side) of the upper substrate 21. On the inner side (on the liquid crystal layer 23 side) of the lower substrate 22, a reflecting layer 27 including a thin films made of a metal having high reflectance, such as aluminum or silver, and a liquid crystal control layer 28 having electrodes, alignment films and the like are sequentially laminated on the lower substrate 22.

The liquid crystal display unit 20 is of a reflective type that performs display by reflecting the external light incident from the outside by the reflecting layer 27.

In the touch panel 30, an upper light-transmitting substrate (a second light-transmitting substrate; operational substrate) 31 and a lower light-transmitting substrate (a first light-transmitting substrate or a fixed substrate) 32 are arranged to face each other and are integrally bonded to each other with a substantially annular adhesive layer 36, and a spatial portion is defined between the upper light-transmitting substrate 31 and the lower light-transmitting substrate 32. The upper light-transmitting substrate 31 is made of a flexible material, such as a transparent film. The lower light-transmitting substrate 32 is comprised of a transparent glass substrate, a plastic substrate, or a plastic film.

A first transparent conductive film 33 is formed on the inner side (the upper light-transmitting substrate 31 side) of the lower light-transmitting substrate 32, and spacers comprised of an insulating layer (insulator) are formed on the first transparent conductive film 33 so as to be spaced apart from each other. The upper light-transmitting substrate 31 and the lower light-transmitting substrate 32 face each other with the insulating layer interposed therebetween.

A lower printed circuit (a first printed circuit) 37 including a lead-out circuit having a conductive paste which is made by dispersing conductive metallic fillers in a resin and a connecting electrode portion connected to the lead-out circuit and the like is formed at the peripheral portion of the lower light-transmitting substrate 32 on the inner side thereof. The printed circuit 37 is connected to the first transparent conductive film 33.

A decorative printing layer 41 is formed at the periphery of the upper light-transmitting substrate 31 on the inner side (on the lower light-transmitting substrate 32 side). thereof. The decorative printing layer 41 is formed as a thin layer by a printing method, such as a screen printing method, a gravure printing method, and an offset printing method, a transfer method, or a vapor deposition method. The decorative printing layer 41 is formed by performing a decorating process to form a decoration, such as a pattern, a character, a mark, a design, or a color. The thickness of the decorative printing layer 41 is, for example, about 0.01 to 100 µm.

The decorative printing layer 41 is located at the upper side of the lower printed circuit (the first printed circuit) 37 and the upper printed circuit (the second printed circuit) 38, which will be described later. When the touch panel 30 is seen from the upper transparent substrate 31 side (the operation surface of the second transparent substrate), the lower printed circuit (the first printed circuit) 37 and the upper printed circuit (the second printed circuit) to be mentioned later are concealed by the decorative printing layer 41, such that they cannot be seen by visual observation.

Since the decorative printing layer 41 is formed as a thin layer, there is little step difference between the inner surface of the upper light-transmitting substrate 31 and the decorative printing layer 41. However, in order to further increase flatness, the inner surface of the upper light-transmitting substrate 31 and the decorative printing layer 41 are covered by an overcoat layer 42 which is more transparent. As the transparent overcoat layer 42, an ultraviolet curable acrylic resin-cured layer or a siliceous layer of a polysilazame-containing compound and the like can be exemplified. Furthermore, as the substance of the overcoat layer 42, it is preferable to use a substance which has an excellent adhesiveness with the decorative printing layer 41, a second transparent conductive film 34 to be mentioned later, and the upper light-transmitting substrate 31 to increase the adhesiveness between the second transparent conductive film 34 and the decorative printing layer 41. The overcoat layer 42 can also be formed by an in-mold molding method, which will be described later, in addition to the printing method, the transfer method, and the vapor deposition method.

The second transparent conductive film 34 is formed on the inner side of the overcoat layer 42. The first and second transparent conductive films 32 and 34 are made of indium tin oxide (ITO) or the like.

Further, the upper printed circuit (the second printed circuit) 38 comprising a lead-out circuit of a conductive paste which is obtained by dispersing conductive metallic fillers in a resin, a connecting electrode portion connected to the lead-out circuit and the like is formed at the peripheral portion of the upper light-transmitting substrate 31 on the inner side thereof. The second transparent conductive film 34 is connected to the printed circuit 38.

When the overcoat layer 42 is formed by an in-mold molding method, first, a transfer film comprised of a supporting sheet and the decorative printing layer 41 formed on one surface of the supporting sheet are prepared. The decorative printing layer 41 is transferred to the upper transparent substrate 31 from the transfer film. Then, the upper transparent substrate 31 is placed in a metallic mold for injection molding. Subsequently, a resin having an excellent adhesiveness with the substrate 31 and the like is injected into the metallic mold to thus form the overcoat layer 42.

Further, the touch panel 30 is fixed to the liquid crystal display unit 20 with the supporting member 39 interposed therebetween. In the state of the touch panel 30 being fixed, the touch panel 30 and the liquid display unit 20 are spaced apart from each other with a predetermined gap.

The touch panel 30 having the above-mentioned configuration is of resistive contact type. When the touch panel 30 is not operated, the first and second transparent conductive films 33 and 34, which are spaced by the film forming thickness of the adhesive layer 36, the printed circuit 37 and 38 or the spacers, are bent by pressing the upper transparent substrate 31 using an indicator 40 or the like. At the pressed position, the first and second transparent conductive film 33 and 34 are electrically connected to each other. A voltage is alternately applied to the printed circuits 37 and 38. A coordinate at the pressed position can be detected by detecting the voltage output from the printed circuit to which the voltage is not applied.

According to the liquid crystal display device 10 having such a configuration, it is possible to perform display using the liquid crystal display unit 20. Furthermore, it is possible to perform coordinate input by scanning the operating surface (the surface of the upper light-transmitting substrate 31) of the touch panel 30 using the indicator 40 (a pen-type indicator in the figure). Therefore, for example, when an operation is performed for selecting an object such as menu items displayed on the liquid crystal display unit 20, the selection operation is performed by pressing the displayed position of the object using the indicator 40.

In the touch panel 30 having such a construction, the decorative printing layer 41 is formed between the second transparent conductive film 34 formed on the inner side of the second transparent substrate 31 and the second light-transmitting substrate 34 such that the printed circuits 37 and 38 arranged at the periphery of the first and second light-transmitting substrates are concealed by the decorative printing layer 41. Thus, when a user sees the touch panel 30 from the operating surface side of the second light-transmitting substrate (the upper side of the second light-transmitting substrate), the first and second printed circuits 37 and 38 are not seen. Furthermore, a decoration is provided on the decorative printing layer 41, which makes a good appearance.

Further, since the decorative printing layer 41 is formed on the inner side of the second light-transmitting substrate 31, the outer surface of the second light-transmitting substrate 31 can be made flat. Therefore, it has no step difference with an operating surface, unlike a conventional touch panel in which a frame such as a bezel is arranged at the outer surface of the tablet. Thus, in the case of scanning the operating surface by using the indicator 40, there is no obstruction against the scanning operation, thereby allowing an easy operation.

Further, since the decorative printing layer 41 can be formed by the above-mentioned printing method, transfer method, or vapor deposition method, it is possible to make the decorative printing layer thin. Also, there is little step difference between the inner surface of the second light-transmitting substrate 31 and the decorative printing layer 41. Therefore, it is possible to make the touch panel 30 according to the present invention thin compared to the conventional touch panel having a frame, such a bezel, on the outer surface of a tablet.

Further, in the touch panel 30 according to the present invention, the overcoat layer 42 is formed between the transparent conductive film 34 formed on the inner side of the second light-transmitting substrate 31 and the decorative printing layer 41. Therefore, it is possible to increase the flatness of the inner side of the second light-transmitting substrate 31.

In the liquid crystal display device 10 according to the present embodiment, the flatness of the second light-transmitting substrate 31 at the outer side thereof is excellent, and the thin touch panel 30 is provided on the front side of the liquid crystal display unit 20, such that it is easy to input a coordinate by scanning the operation surface of the touch panel 30 using the indicator 40 or the like, it is possible to smoothly select objects such as menu items displayed on the liquid crystal display unit, and it is possible to make the liquid crystal display device thin. Furthermore, the light crystal display device 10 is provided with the touch panel 30 including the second light-transmitting substrate 31 having a flat outer surface, such that there is no step portion between the operating surface and the frame unlike the conventional tablet which has a frame such as bezel on the outer surface thereof. Thus, it is possible to prevent the adherence of dust caused by the step portion.

Further, in the touch panel 30, the first and second printed circuits 37 and 38 are concealed by the decorative printing layer 41, such that the first and second printed circuit 37 and 38 are not seen from the outside and the touch panel has a good appearance.

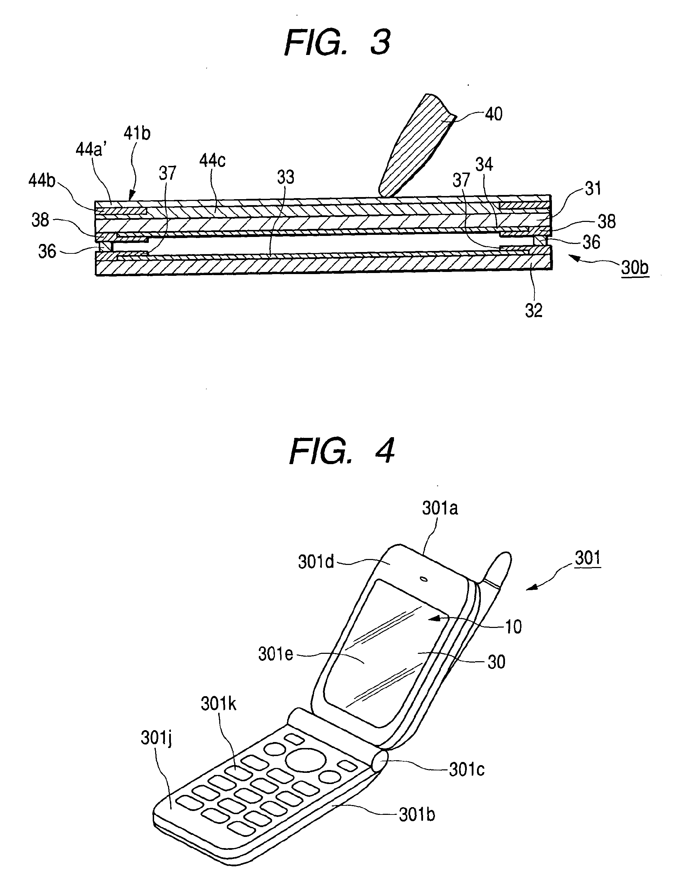

In the liquid crystal display device according to the above-mentioned embodiment, the touch panel 30 is arranged on the front side of the liquid crystal unit 20 as shown in FIG. 1. However, a touch panel 30a shown in FIG. 2 and a touch panel 30b shown in FIG 3 may be used as the touch panel.

The touch panel 30a shown in FIG. 2 is different from the touch panel 30 shown in FIG. 1 in that a decorative printing sheet 41a for concealing the first and second printed circuit 37 and 38 is formed at the periphery of the second light-transmitting substrate 31 on the outer side thereof, and a second printed circuit 37 connected to a second transparent conductive film 33 is formed at the periphery of the second light-transmitting substrate 31 on the inner side thereof.

In the decorative printing sheet 41a, a decorative printing layer 44b such as a pattern, a character, a mark, a design and the like is formed on a sheet-like film 44a having a rectangular frame shape in plan view by a printing method such as a screen printing method, a gravure printing method, an offset printing method, a transfer method or a vapor deposition method. The thickness of the decorative printing sheet 41a is considerably small. Furthermore, on the lower side of the decorative printing layer 44b, an adhesive layer (not shown) is formed. The thickness of the decorative printing sheet 41a is, for example, about 0.015 mm to 0.3 mm.

In the decorative printing sheet 41a before being arranged on the outer side of the second light-transmitting substrate 31, a surface thereof facing the adhesive layer is adhered on a supporting sheet. The decorative printing sheet 41a can be arranged on the outer surface of the second light-transmitting substrate 31 by attaching the surface facing the adhesive layer to the outer surface of the second light-transmitting substrate 31 after peeling off the supporting sheet.

Since the decorative printing sheet 41a is arranged at the outer side of the second light-transmitting substrate 31, the overcoat layer 42 provided at the touch panel 30 in FIG. 1 is not formed at the inner side of the second light-transmitting substrate 31.

Further, the decorative printing sheet 41a is made thin such that there is little step difference between the outer surface of the second light-transmitting substrate 31 and the decorative printing sheet 41a. Therefore, as compared to the conventional touch panel having a frame such as a bezel on the outer surface of a tablet, the touch panel 30a shown in FIG. 2 can be made thinner.

The touch panel 30b shown in FIG. 3 is different from the touch panel 30 shown in FIG. 1 in that a decorative printing sheet 41b for concealing the first and second printed circuit 37 and 38 is formed at the periphery of the second light-transmitting substrate 31 on the outer side thereof, and a second printed circuit 37 connected to the second transparent conductive film 33 is formed at the periphery of the second light-transmitting substrate 31 on the inner side thereof.

In the decorative printing sheet 41b, a decorative printing layer 44b such as a pattern, a character, a mark, a design and the like is formed at the periphery of a sheet-like film 44a' having a rectangular frame shape in plan view by a printing method such as a screen printing method, a gravure printing method, an offset printing method, a transfer method, or a vapor deposition method. The thickness of the decorative printing sheet 41b is considerably small. Furthermore, on the lower side of the sheet-like film 44a' and the decorative printing layer 44b, an adhesive layer 44c is formed. The decorative printing sheet 41b is particularly different from the decorative printing sheet 41a in that the shape of the sheet-like film is rectangular shape in plan view and in that the adhesive layer 44c is formed so as to cover the lower surface of the sheet-like film 44a' and the lower surface of the decorative printing layer 44b. Therefore, it is preferable for the adhesive layer 44c to have an excellent transparency and an excellent defoaming property.

The thickness of the decorative printing sheet 41b is, for example, about 0.015 mm to 0.3 mm.

In the decorative printing sheet 41b before being arranged on the outer surface of the second light-transmitting substrate 31, a surface thereof facing the adhesive layer is adhered on a supporting sheet. The decorative printing sheet 41b can be formed on the outer surface of the second light-transmitting substrate 31 by attaching the surface facing the adhesive layer to the outer surface of the second light-transmitting substrate 31 after peeling off the supporting sheet.

In the touch panels shown in FIGS. 2 and 3, the decorative printing sheet described above is formed on outer surface of the second light-transmitting substrate 31, such that the printed circuits 37 and 38 are not seen when a user views the touch panel from the operation surface side of the second light-transmitting substrate 31. Furthermore, since the decoration is performed on the decorative printing sheet, the touch panel has a good appearance.

The present invention is not limited to the above-described embodiments, and the present invention can be modified in various ways without departing from the sprit of the present invention.

In the above-described embodiments, the image display device according to the present invention is applied to the reflective liquid crystal display device. However, the image display device may be a liquid crystal display device in which a front light (an illumination device) is arranged between the coordinate input device and the liquid crystal display unit.

### (Embodiment of Electronic Apparatus)

FIG. 4 is a perspective view showing an example of a mobile phone (an electronic apparatus) comprising the liquid crystal display device of the previous embodiments related to the present invention.

In the mobile phone 301 shown in FIG. 4, an upper case 301a are expandably connected to a lower case 301b by a hinge 301c, and a display unit 301e is installed on an operation surface 301d of the upper case 301a. The display unit 301e is provided with the liquid crystal display device 10 according to the above-mentioned embodiment while the touch panel 30 is directed upward. In addition, an operation surface 301j of the lower casing 301b is provided with an input keyboard 301k for performing dialing operation.

In the mobile telephone 301 of the present embodiment, the display unit 301e comprises the liquid crystal display device 10 of the previous embodiments, such that the mobile phone can be made as a thin type mobile phone of which appearance and convenience are improved and in which dust and the like is prevented from being attached to the display unit.

## Claims

1. A coordinate input device in which a first light-transmitting substrate and a second light-transmitting substrate oppose each other with an insulating layer interposed therebetween, the second light-transmitting substrate having its one surface serving as an operation surface; transparent conductive films are formed on respective inner sides of the light-transmitting substrates; printed circuits connected to the transparent conductive films are respectively formed at peripheries of the light-transmitting substrates; and a voltage is alternately applied to the printed circuits formed on the first and second light-transmitting substrates, and an output voltage from the substrate to which the voltage is not applied is detected, such that a coordinate of a pressed position can be detected,
wherein a decorative printing layer is formed between the transparent conductive film formed on the inner side of the second light-transmitting substrate and the second light-transmitting substrate; and
the printed circuits respectively formed at the peripheries of the first and second light-transmitting substrates are concealed by the decorative printing layer, such that the printed circuits cannot be viewed from the operation surface of the second light-transmitting substrate.

2. The coordinate input device according to claim 1,
a transparent overcoat layer is formed between the transparent conductive film formed on the inner side of the second light-transmitting substrate and the decorative printing layer.

3. The coordinate input device according to claim 1 or 2,
wherein the thickness of the decorative printing layer is from 0.01 µm to 100 µm.

4. A coordinate input device in which a first light-transmitting substrate and a second light-transmitting substrate oppose each other with an insulating layer interposed therebetween, the second light-transmitting substrate having its one surface serving as an operation surface; transparent conductive films are formed on respective inner sides of the light-transmitting substrates; printed circuits connected to the transparent conductive films are respectively formed at peripheries of the light-transmitting substrates; and a voltage is alternately applied to the printed circuits formed on the first and second light-transmitting substrates, and an output voltage from the substrate to which the voltage is not applied is detected, such that a coordinate of a pressed position can be detected,
wherein a decorative printing sheet is formed on an outer surface of the second light-transmitting substrate; and
the printed circuits respectively formed at the peripheries of the first and second light-transmitting substrates are concealed by the decorative printing sheet, such that the printed circuits cannot be viewed from the operation surface of the second light-transmitting substrate.

5. The coordinate input device according to claim 4,
wherein the thickness of the decorative printing sheet is from 0.015 mm to 0.3 mm.

6. An image display device comprising a coordinate input device according to claim 1 or 4 on a front side thereof.

7. An electronic apparatus comprising, on its display unit, an image display device having a coordinate input device according to claim 1 or 4 on a front side thereof.
